# FASCICULE DE BREVET EUROPEEN

(11) **EP 2 269 128 B1**
(45) Date de publication et mention de la délivrance du brevet: **28.01.2015**
(21) Numéro de dépôt: 09738101.6
(22) Date de dépôt: 27.04.2009
(51) Int. Cl.: G05G 1/10, G05G 5/03, F16F 9/53

(54) **INTERFACE HAPTIQUE A EFFORT DE FREINAGE AUGMENTE**
HAPTISCHE SCHNITTSTELLENVORRICHTUNG MIT VERSTÄRKTE BREMSKRAFT
HAPTIC INTERFACE HAVING BRAKING FORCE INCREASED

(30) Priorité: 29.04.2008 FR 0852898
(43) Date de publication de la demande: 05.01.2011
(73) Titulaire: Commissariat à l'Énergie Atomique et aux Énergies Alternatives, 75015 Paris (FR)
(72) Inventeur: PERIQUET, Florian, F-54520 Laxou (FR); ROSELIER, Samuel, F-92340 Bourg La Reine (FR); LOZADA, José, F-91300 Massy (FR); HAFEZ, Moustapha, F-94110 Arcueil (FR)
(74) Mandataire: Ilgart, Jean-Christophe
(86) Numéro de dépôt international: PCT/EP2009/055040
(87) Numéro de publication internationale: WO 2009/133057

(56) Documents cités:
- EP-A- 1 168 622
- DE-A1-102004 041 690
- DE-A1-102006 012 807
- DE-B3-102005 060 933
- JP-A- 2002 189 559
- US-A- 5 090 531
- US-A1- 2001 041 637
- US-A1- 2007 176 035

## Description

### DOMAINE TECHNIQUE ET ART ANTÉRIEUR

La présente invention se rapporte aux interfaces sensorielles offrant à l'utilisateur un retour d'effort, utilisées en particulier dans le domaine des dispositifs haptiques et dans les domaines de la réalité virtuelle et de l'automobile.

Ce type d'interface haptique est par exemple utilisé dans les véhicules automobiles, formant une interface haptique embarquée assistant le conducteur automobile. Cette interface revêt la forme d'un bouton rotatif à retour d'effort, et permet à l'utilisateur d'interagir avec différents équipements ou accessoires du véhicule comme le GPS (Global Positioning System en terminologie anglaise ou Système de positionnement mondial), la radio, la climatisation....

Un tel bouton est actuellement utilisé dans les véhicules automobiles haut de gamme.

Ce bouton ne possède pas de retour sensoriel en effort. En effet, la résistance ressentie par l'utilisateur pour passer d'un cran à un autre est invariable, celle-ci étant prédéfinie lors de la conception du bouton. Ainsi, l'effort en retour à une intensité constante indépendamment de la vitesse de manipulation du bouton ou du type de commande souhaité.

La résistance appliquée par le bouton est obtenue au moyen d'un moteur à courant continu associé à des réducteurs. D'une part, ce type de générateur de résistance ne permet pas d'offrir une grande sensibilité dans l'effort ressenti par l'utilisateur. D'autre part, il est encombrant et d'une masse non négligeable. Ce qui limite son application dans des systèmes embarqués.

Il existe également des interfaces haptiques, dans lesquelles le retour d'effort est obtenu en utilisant un fluide magnéto-rhéologique. En appliquant un champ magnétique à ce fluide, la viscosité apparente de celui-ci augmente et permet d'exercer un effort de freinage à un élément solidaire du bouton et baignant dans ce fluide. De telles interfaces sont décrites dans le document US 2002/0057152. Cependant, dans le cas d'une application dans un système embarqué, les interfaces existantes ne permettent pas, dans la structure connue, d'aboutir à un compromis intéressant entre leur encombrement, le couple résistant fourni par le bouton, et la consommation électrique pour générer le champ magnétique dans le fluide magnéto-rhéologique.

C'est par conséquent un but de la présente invention d'offrir une interface haptique à retour d'effort apte à offrir des efforts d'amortissement importants, tout en restant compacte.

C'est également un but de la présente invention d'offrir une interface haptique à retour d'effort formant un outil interactif, convivial, intuitif et performant.

### EXPOSÉ DE L'INVENTION

Les buts précédemment énoncés sont atteints par une interface haptique dans laquelle la résistance au mouvement d'un bouton manipulé par un utilisateur est obtenue par un élément interagissant avec un fluide magnéto-rhéologique, la modification de la viscosité apparente de celui-ci étant obtenue au moyen d'un circuit magnétique, l'élément interagissant avec le fluide ayant une paroi cylindrique de révolution mobile en rotation autour de son axe, munie de perçages traversants et/ou de nervures afin d'augmenter la résistance au déplacement dans le fluide magnéto-rhéologique lorsque sa viscosité est augmentée par l'application d'un champ magnétique.

En d'autres termes, l'élément d'interaction n'est pas lisse, mais il comporte des reliefs en saillie ou en creux et/ou des perçages. Ainsi lorsqu'un champ magnétique est appliqué, les chaînes de particules magnétiques contenues dans le fluide magnéto-rhéologique se formant lors de l'application d'un champ magnétique, se trouvent au niveau des reliefs et forment des obstacles au déplacement de ceux-ci, celles-ci sont cisaillées par l'élément d'interaction.

Ainsi, le dispositif offre un amortissement plus important dans un encombrement réduit.

La présente invention permet, par exemple de générer une résistance importante tout en gardant une force à vide à des niveaux tolérables. L'utilisation d'un frein rotatif à base de fluide magnéto-rhéologique permet d'augmenter le rapport entre la force résistante maximale et la force minimale passive. La contrôlabilité du système est alors grandement améliorée.

Par ailleurs, grâce à l'invention, pour un même champ magnétique, on obtient un effort de freinage plus important. On peut donc soit conserver une plage d'actionnement identique à celle des interfaces existantes mais avec une consommation électrique réduite, soit avoir une plage d'actionnement plus importante.

Dans un mode avantageux de réalisation de la présente invention, le système de génération de champ magnétique comporte un aimant permanent associé à un système de génération d'un champ magnétique variable. Ainsi une résistance mécanique est ressentie par l'utilisateur en l'absence d'alimentation électrique. Par ailleurs, il est possible d'annuler ou de renforcer le champ magnétique créé par l'intermédiaire de l'aimant permanent par le système de génération d'un champ magnétique variable; ce qui permet d'avoir une large plage de couples résistants, adaptable à chaque type d'actionnement de l'interface, contrairement aux interfaces actuelles avec moteurs électriques, dont les efforts de retour sont figés.

Par exemple, le champ magnétique généré par l'aimant peut être suffisant pour que la viscosité apparente du fluide soit telle que le mouvement du bouton soit empêché, verrouillant ainsi l'interface en l'absence de courant. L'interface est déverrouillée par application d'un champ magnétique opposé au champ susmentionné au moyen du système de génération d'un champ magnétique variable. Ceci évite, à l'inverse des interfaces existantes, d'alimenter en permanence le système de génération de champ magnétique pour bloquer le bouton, ou de prévoir un mécanisme complexe pour verrouiller et déverrouiller le bouton, rendant l'utilisation de l'interface moins conviviale et intuitive.

Cette large gamme de couples résistants est par ailleurs obtenue pour une consommation électrique réduite, puisqu'une partie ou la totalité du champ magnétique requise pour produire l'effort résistant maximal est générée sans consommation électrique par l'aimant permanent, tout en limitant l'encombrement.

Dans le cas d'un système magnétique comportant un aimant permanent, la puissance électrique est utilisée, soit pour générer un champ magnétique qui vient s'ajouter à celui de l'aimant augmentant ainsi l'amplitude du couple ressenti, soit pour générer un champ magnétique opposé à celui de l'aimant, ce qui annulé l'effet de celui-ci. Pour une puissance électrique donnée, la plage d'utilisation est doublée.

L'interface haptique développée permet donc un contrôle semi-actif du bouton en effort pour générer différentes sensations, et ce par l'intermédiaire d'un fluide magnéto-rhéologique tout en offrant un encombrement et une consommation électrique réduits. On entend par « système semi-actif », un système formant un compromis entre un système « actif » et un système « passif ». Il peut être contrôlé en temps réel mais ne peut pas injecter de l'énergie dans le système commandé. Il contrôle le retour haptique ressenti par l'utilisateur par réaction en absorbant/dissipant de l'énergie selon une loi de commande prédéfinie.

Dans un exemple particulièrement avantageux, les moyens de génération d'un champ magnétique génèrent un champ radial par rapport à la paroi cylindrique de l'élément d'interaction.

La présente invention a alors principalement pour objet une interface haptique comportant un élément d'interaction avec un utilisateur, un arbre de rotation d'axe longitudinal duquel est solidaire en rotation ledit élément d'interaction avec l'utilisateur, un élément d'interaction avec un fluide, ledit élément d'interaction avec le fluide étant solidaire en rotation dudit arbre, ledit fluide étant du type magnéto-rhéologique, un système de génération d'un champ magnétique dans ledit fluide, et une unité de commande apte à générer des ordres audit système de génération de champ magnétique de modifier le champ magnétique, ledit élément d'interaction comportant au moins une paroi cylindrique d'axe longitudinal, munie de lumières traversantes et/ou de motifs en relief.

De manière avantageuse, les lumières et/ou les motifs en relief s'étendent le long de l'axe longitudinal, augmentant davantage l'effort d'amortissement.

Dans un exemple de réalisation, l'élément d'interaction avec le fluide comporte plusieurs parois latérales concentriques espacées les unes des autres et solidaires du fond, ce qui permet d'augmenter la surface d'interaction avec le fluide en limitant l'encombrement total.

De manière particulièrement avantageuse, la paroi cylindrique de l'élément d'interaction est en matériau amagnétique, ce qui permet de réduire les contraintes de guidage en rotation sur l'élément d'interaction

Le système de génération de champ magnétique est avantageusement apte à générer un champ magnétique radial, ce champ provoque des chaines orthogonales à la paroi de l'élément d'interaction ce qui augmente encore les efforts d'amortissement.

L'interface haptique selon l'invention peut comporter au moins un capteur de position angulaire, de vitesse angulaire et/ou d'accélération angulaire dudit arbre, ladite unité de commande générant les ordres en fonction des informations fournies par ledit au moins un capteur de position, de vitesse et/ou d'accélération angulaire.

L'unité de commande peut également générer des ordres au système de génération de champ magnétique à des intervalles de temps donnés fixes ou variables en fonction du mode d'utilisation.

Dans un exemple avantageux de réalisation, le système de génération de champ magnétique comporte des moyens de génération d'un champ magnétique variable et des moyens de génération d'un champ magnétique permanent, ce qui permet d'obtenir une plage d'utilisation plus étendue pour une même consommation électrique.

Par exemple, les moyens de génération d'un champ magnétique permanent comportent au moins un aimant permanent, et les moyens de génération d'un champ magnétique variable comportent au moins une bobine électromagnétique.

Dans une variante de réalisation, les moyens de génération d'un champ magnétique permanent sont disposés à l'intérieur de l'élément d'interaction avec le fluide, immobiles par rapport à celui-ci et les moyens de génération d'un champ magnétique variable sont disposés à l'intérieur de l'élément d'interaction avec le fluide, immobiles par rapport à celui-ci. La bobine peut alors entourer l'aimant permanent.

Dans une variante, l'aimant permanent peut être formé d'au moins un manchon entourant la bobine.

Dans une autre variante, les moyens de génération d'un champ magnétique permanent sont disposés entre deux parois latérales concentriques de l'élément d'interaction et sont immobiles par rapport à celles-ci.

Dans une autre variante encore, les moyens de génération d'un champ magnétique permanent sont fixés sur l'élément d'interaction avec le fluide et les moyens de génération d'un champ magnétique variable sont immobiles par rapport à celui-ci, lesdits moyens de génération d'un champ magnétique permanent étant percés de lumières alignées avec celle de l'élément d'interaction.

On peut également prévoir que les moyens de génération d'un champ magnétique variable sont disposés à l'intérieur de l'élément d'interaction et immobiles par rapport à celui-ci.

Dans un autre exemple de réalisation, l'arbre traverse le système de génération de champ magnétique.

Le capteur de position angulaire, de vitesse angulaire ou d'accélération angulaire peut, par exemple être prévu à une extrémité longitudinale de l'arbre et comporte une partie solidaire de l'arbre en rotation et une partie immobile par rapport à l'arbre. La partie solidaire de l'arbre peut alors être une roue optique et la partie immobile une fourche optique.

De manière avantageuse, l'interface selon l'invention comporte une tige traversant de part en part l'arbre, ladite tige étant est apte à se déplacer longitudinalement et un dispositif de détection du déplacement de ladite tige.

L'interface peut également comporter un dispositif thermique apte à modifier la température de l'élément d'interaction avec l'utilisateur, le dispositif thermique comportant au moins une cellule Peltier, et/ou un dispositif apte à faire vibrer l'élément d'interaction avec l'utilisateur.

La présente invention a également pour objet un ensemble haptique comportant un châssis et l'interface selon la présente invention montée sur ce châssis, ladite interface étant mobile selon l'axe de l'arbre.

L'interface peut être mobile en translation selon au moins une direction orthogonale à l'axe longitudinal, et/ou est mobile en rotation autour d'au moins une direction orthogonale à l'axe longitudinal.

L'ensemble haptique selon l'invention peut comporter des dispositifs à retour d'effort pour opposer une résistance lors d'un mouvement le long au moins d'un axe orthogonal à l'axe longitudinal ou autour de celui-ci.

### BRÈVE DESCRIPTION DES DESSINS

La présente invention sera mieux comprise à l'aide de la description qui va suivre et des dessins en annexe sur lesquels :
- la figure 1A est une vue en coupe longitudinale schématique d'un premier exemple de réalisation d'une interface haptique selon la présente invention,
- la figure 1B est une vue en coupe longitudinale d'une réalisation industrielle de l'interface de la figure 1A, représentée en perspective,
- les figures 1C et 1D sont des représentations schématiques en perspective partielles d'un élément d'interaction selon la présente invention,
- la figure 2 est une demi-vue en coupe longitudinale d'une deuxième variante de réalisation de l'interface des figures 1A et 1B,
- la figure 3 est une demi-vue en coupe longitudinale d'un deuxième exemple de réalisation d'une interface haptique selon la présente invention, dans lequel l'arbre de rotation du bouton traverse le stator interne,
- les figures 4 à 7 sont des demi-vues en coupe longitudinale de variantes de réalisation de l'interface de la figure 3 dans laquelle l'arbre de rotation du bouton traverse le stator interne,
- la figure 8 est une vue en coupe longitudinale d'une interface identique à celle de la figure 3 intégrant un déplacement longitudinal du bouton. L'arbre est creux et permet de positionner un bouton de type clic en dessous de l'arbre,
- la figure 9 est une vue en coupe longitudinale d'un autre exemple de réalisation d'une interface selon la présente invention dans laquelle un champ magnétique n'apparaît que lors d'une alimentation en courant électrique,
- les figures 10 et 11 sont des vues en perspective d'une interface selon l'invention associée à un dispositif de translation et de rotation respectivement.

### EXPOSÉ DÉTAILLÉ DE MODES DE RÉALISATION PARTICULIERS

Nous allons maintenant décrire en détail des exemples de réalisation de l'interface haptique selon la présente invention.

L'interface haptique présente au moins un degré de rotation autour d'un axe X formant généralement un axe de révolution pour l'interface.

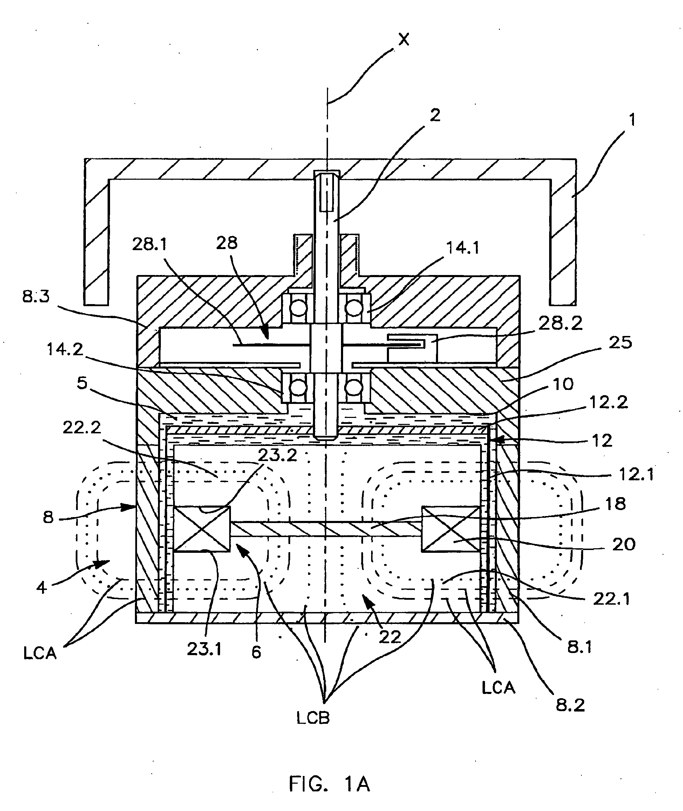

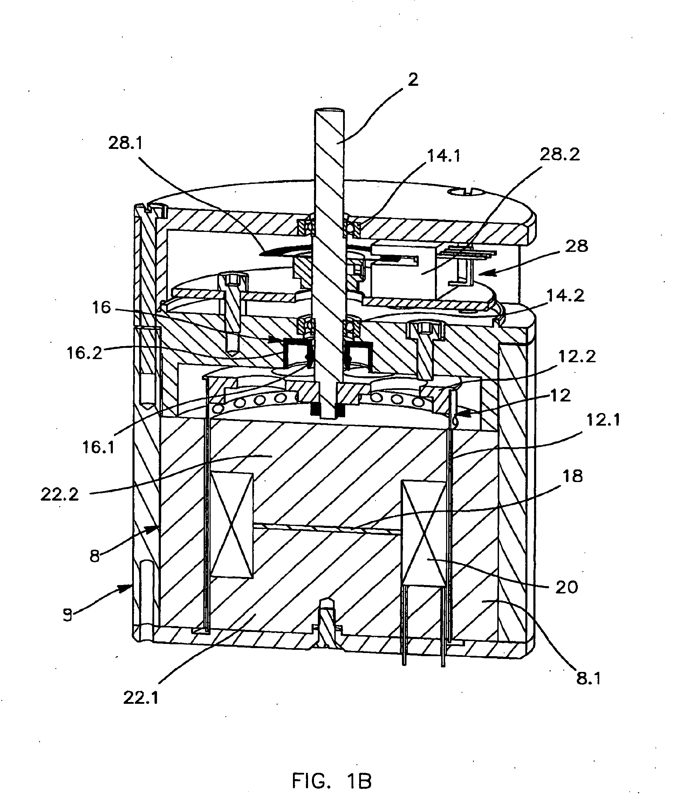

Sur les figures 1A et 1B, on peut voir un premier exemple de réalisation d'une interface selon l'invention comportant un élément 1 destiné à être manipulé par un utilisateur et qui sera désigné par la suite « bouton », ce bouton est solidaire en rotation d'un arbre 2 mobile en rotation autour de l'axe X, et un dispositif de génération d'effort résistant 4 s'opposant à la rotation de l'arbre 2.

Le dispositif 4 comporte un fluide dont on peut modifier les caractéristiques au moyen d'un champ magnétique et un système de génération d'un champ magnétique 6 reçus dans un boîtier 8. Le fluide est, par exemple un liquide magnéto-rhéologique 5.

Le boîtier 8 est de forme cylindrique formé par une paroi latérale 8.1, un fond inférieur 8.2 et un fond supérieur 8.3.

L'arbre 2 traverse le fond supérieur 8.3 et pénètre à l'intérieur du boîtier 8.

Le boîtier 8 délimite une chambre étanche 10 confinant le fluide magnéto-rhéologique 5, toute ou partie de cette chambre étant soumise à un champ magnétique généré par le système 6.

Le dispositif 4 comporte également un élément 12 solidaire en rotation de l'arbre 2 et logé dans la chambre étanche 10. Cet élément est apte à interagir avec le fluide magnéto-rhéologique 5, la rotation de l'élément 12 étant plus au moins freinée par le fluide magnéto-rhéologique 5 en fonction de sa viscosité apparente.

Dans l'exemple représenté, l'élément 12 a la forme d'une cloche cylindrique de section transversale circulaire formée d'une paroi latérale 12.1 et d'un fond 12.2. La chambre étanche a une forme correspondant à celle de la cloche 12, ce qui permet de réduire la quantité de fluide nécessaire. En coupe longitudinale, l'élément 12 interagissant avec le fluide a la forme d'un U renversé.

Le fond 12.2 est fixé sur l'extrémité de l'arbre 2 pénétrant dans la chambre étanche 10, ainsi que la chambre 10.

La paroi latérale 12.1 de l'élément 12 peut être en matériau magnétique ou amagnétique. De manière avantageuse, la paroi latérale 12.1 est réalisée en matériau amagnétique, ce qui permet de réduire les contraintes de guidage en rotation de l'élément 12. En effet, du fait du matériau magnétique, il n'y a pas d'attraction magnétique entre les pôles et la paroi latérale 12.1, par conséquent l'élément 12 n'est pas attiré par les aimants. Le guidage en rotation de l'élément 12 peut être simplifié, il n'est pas nécessaire de mettre en oeuvre des moyens de guidage encombrant.

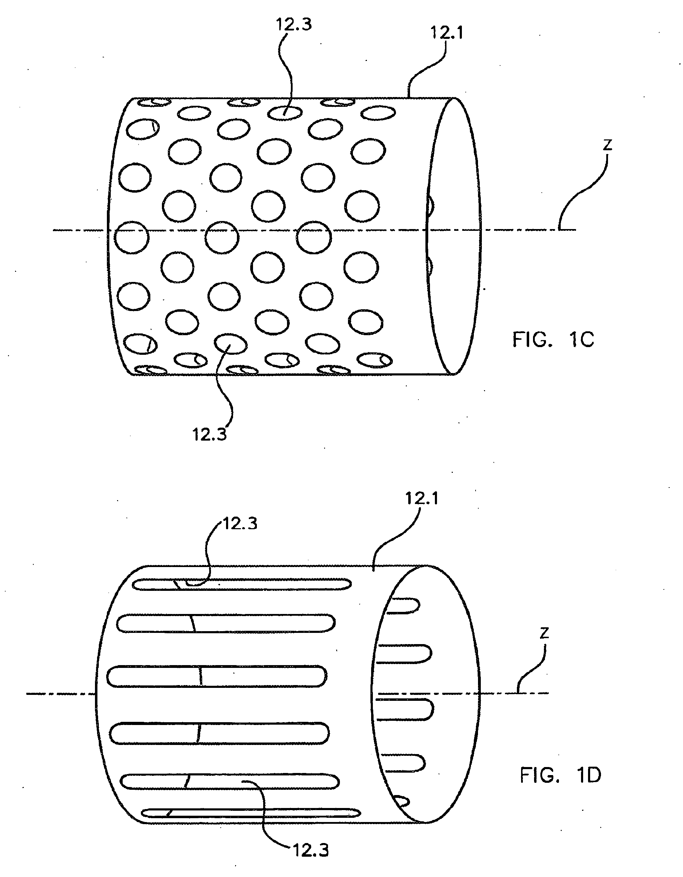

L'utilisation d'un élément destiné à interagir avec le fluide à viscosité variable en matériau amagnétique et comportant des lumières et/ou des reliefs permet d'obtenir des niveaux de freinage équivalents a ceux obtenus avec une pièce en matériau magnétique tout en simplifiant de manière importante la structure mécanique adjacente, notamment les moyens mis en oeuvre pour le guidage.Selon la présente invention, la paroi latérale 12.1 est munie de motifs 12.3 ; dans les exemples des figures 1C et 1D, il s'agit de motifs prédécoupées. Ces motifs 12.1 sont par exemple des lumières de forme circulaire (figure 1C) ou des lumières sous forme de rainures longitudinales (figure 1D).

On pourrait prévoir des lumières de toute autre forme, par exemple carrées ou des lumières inclinés par rapport à l'axe de la cloche. Ces motifs permettent d'augmenter la capacité de freinage de l'élément 12 et ainsi le couple ressenti par l'utilisateur.

On pourrait également prévoir des motifs en relief, par exemple ayant la forme de nervures longitudinales.

On pourrait prévoir de réaliser un élément d'interaction comportant à la fois des lumières et des reliefs.

Dans l'exemple représenté, la chambre étanche 10 est complètement remplie de fluide magnéto-rhéologique 5. La cloche 12 est donc complètement immergée dans le fluide magnéto-rhéologique 5. Plus particulièrement, les faces intérieure et extérieure de la paroi 12.1 sont en contact avec le fluide magnéto-rhéologique 5. Mais on pourrait prévoir que seule la paroi latérale 12.1 soit immergée dans le fluide magnéto-rhéologique 5.

L'arbre 2 est supporté par des paliers 14.1, 14.2, isolés de manière étanche du fluide magnéto-rhéologique 5. Un élément d'étanchéité 16, visible sur la figure 1B, est prévu entre la chambre étanche 10 et la zone contenant les paliers 14.1, 14.2. Le moyen d'étanchéité entoure l'arbre de rotation 2, celui-ci comporte une lèvre intérieure 16.1 bordant l'arbre de rotation 2 et assurant une étanchéité dynamique et une lèvre extérieure 16.2 en contact statique avec le boîtier.

L'étanchéité peut être assurée par tout autre type de joint, classique ou non, comme par exemple un ferrofluide maintenu en place à l'aide d'un aimant permanent.

Le système de génération de champ magnétique 6 est apte à générer un champ magnétique variable de manière à faire varier la viscosité apparente du fluide magnéto-rhéologique 5.

Selon un exemple particulièrement avantageux, le système 6 comporte un moyen 18 apte à générer un champ magnétique permanent en l'absence d'alimentation électrique, par exemple un aimant permanent, et un moyen 20 apte à générer un champ magnétique variable.

A des fins de simplicité, le moyen à magnétisation permanente 18 sera désigné par aimant permanent, mais tout autre dispositif offrant une telle magnétisation ne sort pas du cadre de la présente invention.

L'aimant est, dans l'exemple représenté, formé par un disque disposé à l'intérieur de la cloche 12.

Le moyen de génération d'un champ magnétique variable 20 est formé, par exemple par au moins une bobine disposée à l'intérieur de la cloche 12 et entourant l'aimant permanent 20. La (ou les) bobine (s) a (ont) un axe confondu avec l'axe longitudinal X.

En outre, le système 6 comporte un circuit magnétique pour guider le champ magnétique de manière à ce que les lignes de champ traversent la paroi latérale 12.1 de la cloche 12 et se referment à l'intérieur de la paroi latérale 8.1, afin que les chaines de particules magnétiques contenues dans le fluide magnéto-rhéologique 5 traversent la paroi latérale 12.1. De manière générale, l'aimant permanent 18 et la bobine 20 sont aptes à générer un champ magnétique dont les lignes de champ traversent le fluide et se referment sur l'aimant et la bobine.

De manière avantageuse, le système de génération de champ magnétique est tel qu'il génère de lignes de champs orthogonales à la paroi 12.1 sur une partie de leur parcours, ce qui a pour conséquence l'apparition de chaines orthogonales à la paroi 12.1, augmentant encore l'effort nécessaire au cisaillement des chaines.

Le circuit magnétique comporte une pièce 22 en matériau apte à conduire le champ magnétique formant un noyau, disposée à l'intérieur de la cloche et dans laquelle sont disposés l'aimant permanent 18 et la bobine 20.

Dans l'exemple représenté, le noyau 22 en forme de cylindre régulier comporte une partie inférieure 22.1 et une partie supérieure 22.2, l'aimant et la bobine étant pris en sandwich entre les deux parties 22.1, 22.2. L'aimant et les deux parties 22.1 et 22.2 sont solidaires les unes des autres.

La chambre 10 est délimitée, d'une part par les faces extérieures du noyau 22, par la paroi latérale extérieure 8.1 et par une paroi de séparation supérieure 25 traversée par l'arbre de rotation 2.

En particulier, dans l'exemple représenté, les parties 22.1, 22.2 comportent chacune un épaulement 23.1, 23.2 défini entre une partie de plus grand diamètre et une partie de plus petit diamètre, l'aimant 18 est disposé entre les extrémités libres des parties de plus petit diamètre et la bobine 20 est montée autour des parties de plus petit diamètre en appui sur les épaulements 23.1, 23.2 par ses deux extrémités axiales.

Le circuit magnétique comporte également la paroi extérieure 8.1 du boîtier 8, formant la paroi extérieure de la chambre étanche 10.

On pourrait prévoir que seule la partie intérieure de la paroi extérieure 8.1 soit en matériau magnétique, et non la paroi 8.1 en entier, ce qui permettrait de confiner davantage le champ magnétique.

Le circuit magnétique est reçu dans une enveloppe 9, formant l'enveloppe extérieure du dispositif haptique.

Dans le cas où la paroi latérale 12.1 est en matériau magnétique, le circuit magnétique est également formé par la paroi latérale 12.1 de la cloche 12.

Les lignes de champ de l'aimant LCA traversent la partie supérieure 22.1 du noyau, puis la chambre 10 via la paroi latérale 12.1 de la cloche 12, la paroi latérale extérieure 8.1 du boîtier 8, la partie inférieure 22.2 du noyau 22 et se referment sur l'aimant 18.

Les lignes de champ LCB de la bobine 20 empruntent le même circuit magnétique que les lignes de champ magnétique LCA de l'aimant permanent 18.

Cette architecture selon la présente invention permet un très bon guidage du champ magnétique de l'aimant 18 et de la bobine 20.

Ainsi, il est possible en contrôlant le sens et l'intensité du courant circulant dans la bobine 20 d'amplifier ou alors de réduire, voire d'annuler le champ magnétique produit par l'aimant 18.

Le noyau central 22 et la paroi 8.1 forment un stator, tandis que la cloche 12 destinée à tourner autour de l'axe X forme un rotor.

La partie supérieure du boîtier recevant les paliers 14.1, 14.2, l'arbre et le fond de la cloche 12.2 sont réalisés en matériau amagnétique, ainsi que le fond inférieur 8.2 du boîtier afin d'éviter la dispersion des lignes de champ.

Il est également prévu des moyens 28 pour mesurer la position angulaire de la cloche 12, et/ou sa vitesse angulaire, et/ou son accélération angulaire et donc celle du bouton 1. Ces moyens sont, par exemple disposés entre les deux paliers 14.1, 14.2 et sont formés par un capteur de rotation de type codeur optique, formé par une roue codeuse 28.1 solidaire en rotation de l'arbre 2 et d'une fourche optique 28.2 fixée sur le boîtier.

Tout capteur apte à fournir une image logique ou analogique de la position de la cloche 12, de sa vitesse et/ou de son accélération entre dans le cadre de la présente invention.

Le capteur 28 est raccordé à une unité de commande (non représentée) à laquelle il transmet ses mesures.

La bobine 20 est, quant à elle, reliée à une source de courant électrique (non représentée) commandée par l'unité de commande afin de faire varier l'intensité et le sens du courant dans la bobine en fonction de la position de la cloche 12, et donc du bouton 1, mesurée par le capteur 28.

Nous allons maintenant expliquer le fonctionnement de cette interface haptique selon la présente invention, dans l'exemple particulier représenté sur les figures 1A et 1B.

Lorsque l'utilisateur manipule le bouton 1, en particulier lorsqu'il le fait pivoter dans un sens ou dans l'autre autour de l'axe X, le capteur de rotation 28 détecte la rotation de l'arbre 2 et transmet cette information, ainsi que la mesure du déplacement, de la vitesse et/ou de l'accélération angulaire de l'arbre 2 et, donc de la cloche 12, à l'unité de commande.

L'unité de commande en fonction des informations reçues génère un ordre à l'alimentation électrique d'envoyer un courant d'une intensité donnée dans un sens donné en fonction de modèles préenregistrés ou en fonction d'une communication avec un système extérieur (comme par exemple le système GPS dans une automobile), à la bobine 20.

Ce courant peut être nul si l'unité de commande estime que le champ magnétique généré par l'aimant permanent 18 suffit à modifier la viscosité apparente du fluide 5 pour générer des efforts résistants suffisants sur la cloche 12.

Ce courant peut être tel qu'il augmente le champ magnétique, donc la viscosité apparente du fluide et, par conséquent les efforts résistants sur la cloche 12.

Ce courant peut être tel que la bobine 20 génère un champ magnétique de sens opposé à celui du champ magnétique produit par l'aimant permanent 18, l'addition des deux champs donne alors un champ magnétique résultant d'intensité réduite, voire nulle par rapport à celle du champ produit par l'aimant permanent 18 seul.

Les caractéristiques du courant envoyé dans la bobine peuvent également être fonction de la vitesse à laquelle le bouton 1 est tourné. Le capteur peut être un capteur de déplacement angulaire, un capteur de vitesse angulaire ou d'accélération angulaire. Les informations sur le mouvement sont traitées par l'organe de commande afin de définir la consigne à envoyer à l'organe de puissance.

Ce courant provoque l'apparition d'un champ magnétique qui une fois superposé au champ magnétique de l'aimant permanent est appliqué au fluide magnéto-rhéologique, les particules magnétiques contenues dans le fluide s'alignent alors le long des lignes de champ du champ magnétique formant des chaînes. Ces chaînes sont d'autant plus résistantes que le champ magnétique est élevé. Ces chaînes de particules magnétiques traversent la cloche par les lumières, et s'opposent au déplacement en rotation de la cloche, elles augmentent donc les efforts de cisaillement nécessaires pour déplacer la cloche dans le fluide, et donc pour déplacer le bouton. Les lignes de champ sont avantageusement radiales lorsqu'elles traversent la chambre remplie de fluide, les chaînes formées sont donc sensiblement orthogonales à la surface de la paroi latérale de la cloche et sont d'autant plus efficaces pour freiner le déplacement de la cloche.

Dans le cas de motifs en relief, ces motifs forment des obstacles pour la rotation de la cloche, augmentant également l'effort nécessaire pour déplacer la cloche.

Dans l'exemple de réalisation avantageux dans lequel le système de génération de champ magnétique comporte un aimant permanent et au moins une bobine, il est possible de générer un effort résistant en l'absence de courant. Ainsi, en choisissant l'aimant permanent, plus particulièrement le champ magnétique qu'il génère, de telle sorte que celui-ci modifie la viscosité apparente du fluide pour que les efforts résistants sur la cloche immobilisent le bouton en rotation, il est alors possible de verrouiller l'interface sans consommer d'électricité.

En outre, en couplant un aimant permanent et une bobine, on atteint des valeurs de champ magnétique importantes, et donc des couples résistants appliqués à la cloche élevés tout en limitant l'encombrement de l'interface et la puissance électrique nécessaire.

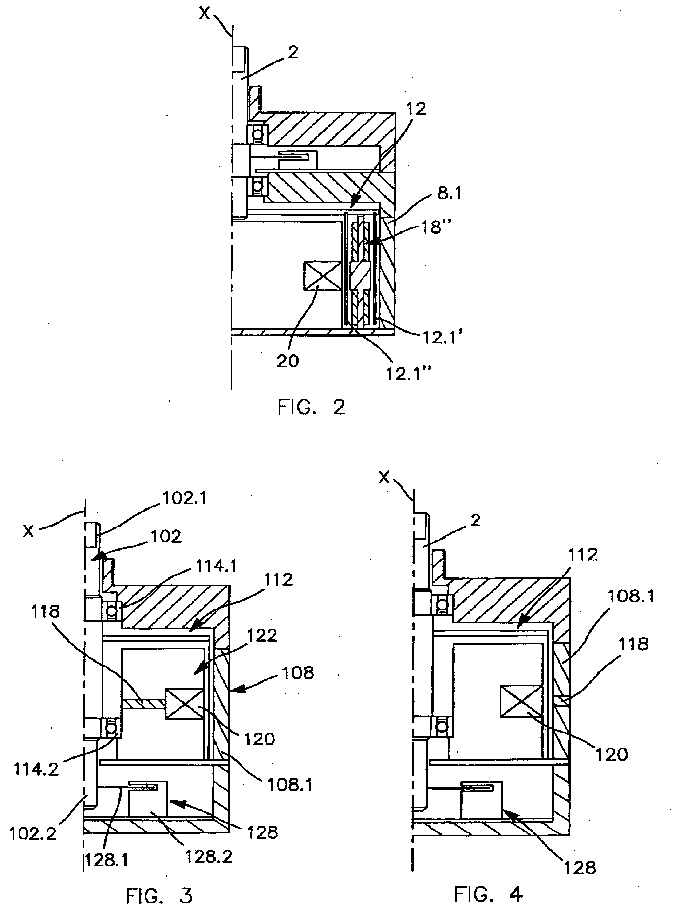

Sur la figure 2, on peut voir une variante de réalisation de l'interface selon l'invention, dans laquelle la cloche est doublée afin d'augmenter la surface d'interaction avec le fluide.

Dans l'exemple représenté, la cloche 12 comporte une paroi latérale extérieure 12.1' et une paroi latérale intérieure 12.1" cylindriques concentriques solidaires du fond 12.2, et espacées l'une de l'autre pour permettre au fluide de pénétrer entre les deux parois.

Selon la présente invention, les parois 12.1' et 12.1" comportent des lumières, similaires à celles représentées sur les figures 1C et 1D et/ou des motifs en relief.

Le fluide se trouve de part et d'autre des deux parois concentriques et les traversent, la surface de cisaillement du fluide est approximativement doublée par rapport à celle de l'interface des figures 1A et 1B. On peut, bien entendu prévoir plus de deux parois concentriques, leur nombre dépendant notamment de l'encombrement maximal requis.

Dans l'exemple représenté, on prévoit de disposer l'aimant permanent 18" entre les deux parois 12.1' et 12.1'', celui-ci est fixé au fond inférieur 8.2 du boîtier 8 et forme un manchon venant s'interposer entre les deux parois 12.1' et 12.1'' de la cloche.

On peut également prévoir d'utiliser une cloche dont la jupe est formée de plusieurs parois concentriques dans une structure identique à celle des figures 1A et 1B.

Sur la figure 3, on peut voir un autre exemple de réalisation d'une interface selon la présente invention, cette interface diffère de celle décrite jusqu'à présent en ce que l'arbre de rotation traverse le stator, plus particulièrement le système de génération du champ magnétique.

Les références utilisées pour la description de cet exemple de réalisation seront augmentées de 100 par rapport à celle utilisés pour la description des figures 1A et 1B.

L'interface comporte un arbre 102 d'axe longitudinal X à laquelle est fixé à une première extrémité 102.1 le bouton destiné à être manipulé par l'utilisateur.

L'arbre 102 est monté en rotation dans un boîtier 108 au moyen de paliers 114.1 et 114.2.

Le boîtier 108 forme un stator et l'arbre 102 forme un rotor duquel est solidaire en rotation une cloche 112 baignant dans un fluide dont les propriétés de viscosité peuvent varier avec le champ magnétique.

Par rapport à l'exemple des figures 1A et 1B, l'arbre traverse le noyau central de part en part.

Le capteur de position, de vitesse ou d'accélération 128 est, dans cette représentation, placé à une extrémité inférieure de l'arbre 102.2 opposée à celle à laquelle est fixé le bouton (non représenté). Celui-ci est du même type que décrit précédemment, il comporte, par exemple, une roue codeuse 128.1 et une fourche optique 128.2. Le capteur est isolé du fluide au niveau du palier 114.2.

Le circuit magnétique représenté est similaire à celui de l'exemple des figures 1A et 1B, il comporte un aimant permanent 118 en forme d'anneau au centre du noyau et une bobine 120.

La paroi latérale 108.1 du boîtier est réalisée en matériau magnétique ainsi que le noyau 122.

Le fonctionnement de cette interface est identique à celui des figures 1A et 1B et ne sera pas repris.

Sur la figure 4, on peut voir une variante de réalisation du deuxième exemple de réalisation de l'interface, dans laquelle l'aimant permanent 118 n'est plus disposé dans le noyau à l'intérieur de la cloche 112, mais dans la paroi latérale 108.1 du boîtier. L'aimant a, dans cette configuration la forme d'un anneau prévu radialement en alignement avec la bobine 120. La paroi latérale 108.1 est réalisée en un matériau apte à conduire un champ magnétique.

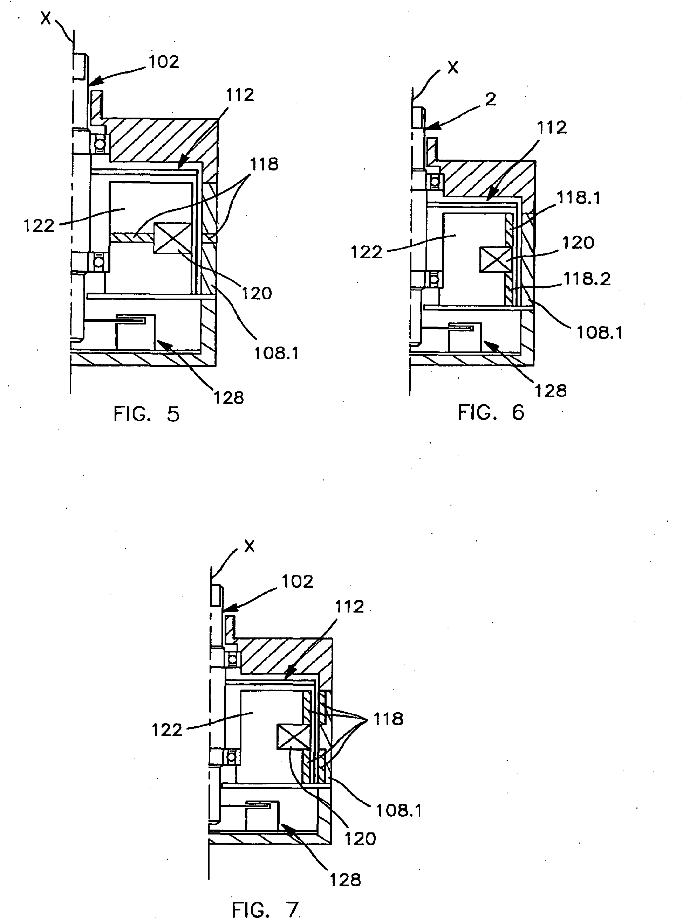

Sur la figure 5, une autre variante de l'interface de la figure 3 est représentée, cette fois-ci l'aimant permanent 118 est prévu à la fois dans le noyau central 122 et dans la paroi latérale 108.1 du boîtier 108.

Sur la figure 6, on peut voir une autre variante de réalisation du deuxième exemple de réalisation, dans laquelle l'aimant permanent 118 est prévu, non plus à l'intérieur du noyau 122, mais à l'extérieur de celui-ci formant son enveloppe extérieure.

Dans l'exemple représenté, le noyau central 122 est d'une seule pièce en matériau magnétique et comporte une rainure annulaire dans laquelle est montée la bobine 120. La bobine 120 fait alors saillie radialement de la périphérie radialement extérieure du noyau.

L'aimant 118, quant à lui, est formé de deux manchons cylindriques 118.1, 118.2 disposés pour l'un au dessus de la bobine et, pour l'autre, au dessous de la bobine.

On peut prévoir de disposer l'aimant permanent 118 dans la paroi latérale 108.1 du boîtier.

D'ailleurs, sur la figure 7, on peut voir une interface dans laquelle des aimants permanents 118 sont prévus à la fois sur la périphérie extérieure du noyau central 122 et dans la paroi latérale 108.1 du boîtier.

La paroi latérale 108.1 est réalisée en un matériau apte à conduire un champ magnétique.

Des interfaces selon le deuxième exemple de réalisation comportant une cloche à plusieurs jupes concentriques, similaire à celle représentée sur la figure 2 entrent dans le cadre de la présente invention.

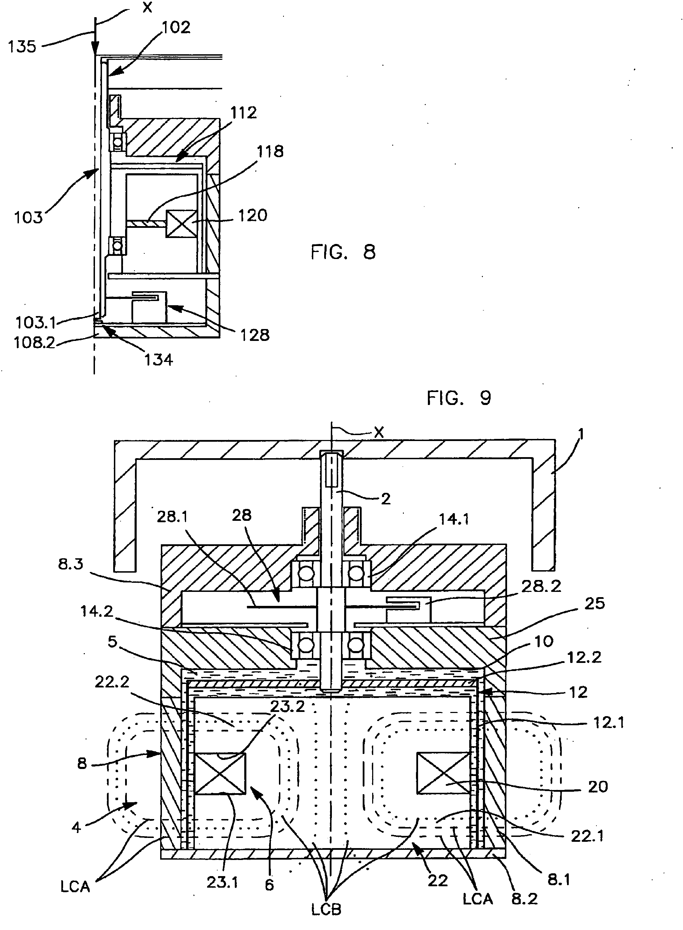

Sur la figure 8, on peut voir l'interface de la figure 3 dans laquelle un degré de liberté a été ajouté au bouton. L'arbre 102 est creux et une tige 103 est montée mobile axialement dans l'arbre 102, la tige 103 est solidaire en translation du bouton de commande par une première extrémité longitudinale 103.1, et traverse de part en part l'arbre 102. La tige 103 et l'arbre 102 sont solidaires en rotation, ainsi la rotation du bouton est transmise à l'arbre 102 par la tige 103.

Un capteur de déplacement axial 134 est prévu pour détecter le déplacement axial de la tige 103. Ce capteur peut, par exemple être un contacteur électrique 134 disposé sur le fond inférieur 108.2 du boîtier en regard d'une deuxième extrémité longitudinale 103.1 de la tige 103. Lorsque la tige 103 est déplacée axialement vers le bas selon la flèche 135, elle actionne le contacteur 134. Ce contacteur électrique est relié à l'unité de commande et peut, par exemple servir de système de validation.

L'utilisateur peut ainsi d'une seule main sélectionner un onglet dans un menu en déplaçant un curseur par rotation du bouton autour de l'axe X et valider ce choix en enfonçant le bouton provoquant le déplacement axial de la tige 103 et la commutation du contacteur 134.

Le capteur de déplacement axial 134 peut être de tout autre type, par exemple optique ou mécanique.

Dans l'exemple représenté seule la tige 103 se déplace le long de l'axe X. Cependant, on peut prévoir que toute l'interface formée du boîtier et du bouton se déplace selon l'axe X. On peut intégrer ce déplacement linéaire dans le bouton 1 sans perturber le fonctionnement du reste du système.

Ce degré de liberté supplémentaire peut bien entendu être appliqué à tous les exemples de réalisation.

Le deuxième exemple de réalisation est particulièrement adapté au déplacement longitudinal de du bouton, puisque la capture de son déplacement est aisée en utilisant le fond inférieur de l'interface qui est inutilisé.

Il est bien entendu que les nombres de bobines et/ou d'aimants mentionnés dans la description ci-dessus ne sont en aucun cas limitatifs et peuvent varier suivant les configurations. Les formes, notamment celles des aimants, ne sont également en aucun cas limitatives.

Sur la figure 9, on peut voir un autre exemple de réalisation d'une interface selon la présente invention, dans laquelle le système de génération d'un champ magnétique comporte uniquement un moyen de génération d'un champ magnétique variable 20, par exemple formé par une bobine. Ainsi, en l'absence d'alimentation électrique, il n'y a pas de champ magnétique, ceci a pour avantage d'offrir une force à vide faible. Ceci s'applique à tous les exemples de réalisation décrits précédemment.

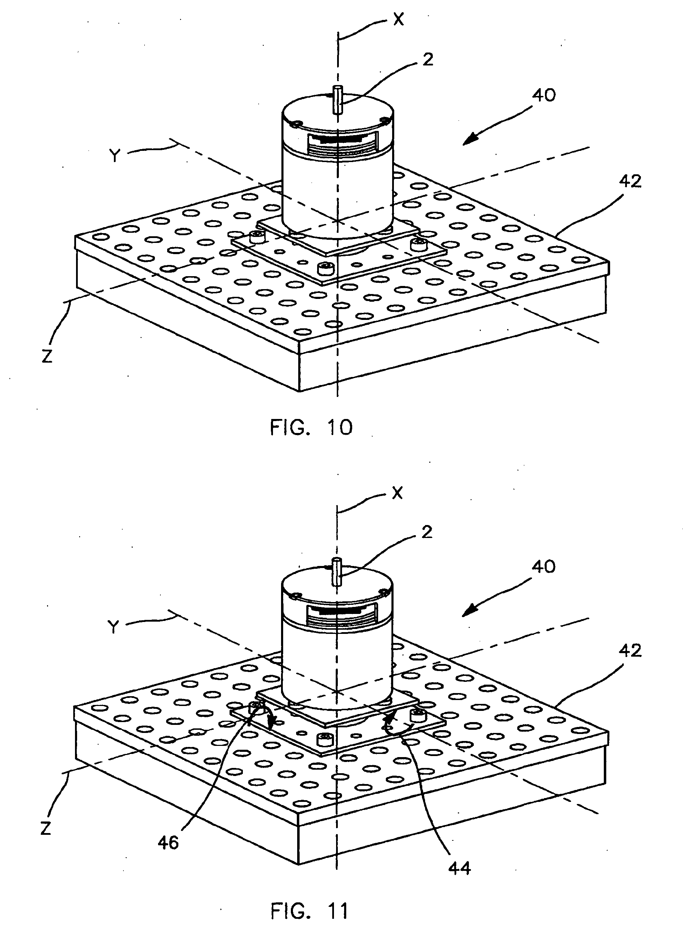

Sur la figure 10, on peut voir l'interface selon la présente invention intégrée à un dispositif 40 muni d'un châssis 42 sur lequel elle est montée apte à se translater selon des axes Y et Z., formant ainsi une commande de type « joystick ». Le dispositif peut comporter des systèmes à retour d'effort dans ces directions Y et Z.

Sur la figure 11, l'interface est montée apte à pivoter autour des axes Y et Z selon les flèches 44, 46 respectivement.

Ces intégrations peuvent, par exemple permettre d'ajouter des fonctionnalités à laquelle le bouton est déjà couplé.

On peut également prévoir d'intégrer dans le bouton un dispositif thermique pour simuler des variations de température, ce dispositif étant par exemple une cellule Peltier. Ainsi, dans le cas de la commande du système de chauffage-climatisation, l'utilisateur commandant un abaissement de température ressentirait une impression de froid au niveau des doigts manipulant le bouton, et dans le cas où il commande une élévation de la température, ressentirait une impression de chaud au niveau de ses doigts manipulant le bouton. L'information ainsi transmise à l'utilisateur serait plus intuitive, l'utilisateur pourrait actionner le bouton uniquement en fonction de ce qu'il ressent. Le conducteur peut alors ne plus effectuer un contrôle visuel de l'écran, la sécurité de conduite et son confort en sont donc améliorés.

On peut également prévoir un dispositif générant des vibrations dans le bouton, permettant d'enrichir l'information rendue à l'utilisateur. Par exemple, si l'utilisateur a un appel téléphonique alors qu'il est en train de naviguer dans un menu, il peut être averti par une vibration.

On peut également prévoir de mettre en oeuvre des capteurs d'effort ou de couple pour mesurer l'effort ou le couple appliqué au bouton, et adapter la résistance à une valeur de consigne de cet effort ou de ce couple. Par exemple, dans le cas où un couple est appliqué au bouton, la résistance à la rotation générée par le fluide peut être adaptée en modifiant la valeur du champ magnétique.

Il est bien entendu que l'unité de commande peut recevoir d'autres informations que la position angulaire de l'arbre de rotation, l'accélération ou la vitesse angulaire du bouton pour commander le champ magnétique à appliquer au fluide, par exemple des informations sur la pression exercée sur celui-ci, des informations concernant l'état du véhicule (par exemple, la vitesse, la position GPS, la température intérieure et extérieure, etc....).

Le retour appliqué peut également être indépendant d'informations extérieures en prenant par exemple une base temporelle. Le retour haptique ne dépend alors pas du mouvement effectué mais du temps. On peut par exemple appliquer des à-coups haptiques à une fréquence fixe et ce, quelle que soit la vitesse de rotation.

On peut également prévoir de coupler des informations extérieures et une base temporelle pour commander le système de génération de champ magnétique.

## Revendications

1. Interface haptique comportant un élément d'interaction avec un utilisateur, un arbre de rotation (2, 102) d'axe longitudinal (X) duquel est solidaire en rotation ledit élément d'interaction avec l'utilisateur (1), un élément d'interaction avec un fluide (12, 112), ledit élément d'interaction avec le fluide (12, 112) étant solidaire en rotation dudit arbre (2, 102), ledit fluide étant du type magnétorhéologique, un système de génération (6) d'un champ magnétique dans ledit fluide, et une unité de commande apte à générer des ordres audit système de génération de champ magnétique (6) de modifier le champ magnétique, ledit élément d'interaction avec le fluide comportant au moins une paroi cylindrique d'axe longitudinal (x), caractérisée en ce sue la paroi cylindrique est munie de lumières traversantes (12.3, 112.3) et/ou de motifs en relief et/ou en creux.

2. Interface haptique selon la revendication 1, dans lequel les lumières et/ou les motifs en relief et/ou en creux s'étendent le long de l'axe longitudinal (X).

3. Interface haptique selon la revendication 1 ou 2, dans laquelle l'élément d'interaction (12) avec le fluide comporte plusieurs parois latérales (12.1', 12.1") concentriques espacées les unes des autres et solidaires du fond (12.2).

4. Interface haptique selon l'une des revendications 1 à 3, dans laquelle la paroi cylindrique de l'élément d'interaction (12) est en matériau amagnétique.

5. Interface haptique selon l'une des revendications précédentes, dans laquelle ledit système de génération (6) de champ magnétique est apte à générer un champ magnétique radial.

6. Interface haptique selon l'une des revendications 1 à 5, comportant au moins un capteur de position angulaire, de vitesse angulaire et/ou d'accélération angulaire (28, 128) dudit arbre (2, 102), ladite unité de commande générant les ordres en fonction des informations fournies par ledit au moins un capteur de position, de vitesse et/ou d'accélération angulaire (28, 128).

7. Interface haptique selon l'une des revendications 1 à 6, dans laquelle l'unité de commande génère des ordres au système de génération de champ magnétique à des intervalles de temps donnés.

8. Interface haptique selon l'une des revendications 1 à 7, dans lequel le système de génération de champ magnétique comporte des moyens de génération d'un champ magnétique variable (20, 120) et des moyens de génération d'un champ magnétique permanent (18, 18'', 118).

9. Interface haptique selon la revendication 8, dans laquelle les moyens de génération d'un champ magnétique permanent (18, 18", 118) comportent au moins un aimant permanent.

10. Interface haptique selon la revendication 8 ou 9, dans laquelle les moyens de génération d'un champ magnétique variable (20, 120) comportent au moins une bobine électromagnétique.

11. Interface haptique selon l'une des revendications 8 à 10, dans laquelle les moyens de génération d'un champ magnétique permanent sont disposés à l'intérieur de l'élément d'interaction avec le fluide (12), immobiles par rapport à un boîtier contenant le système de génération d'un champ magnétique, l'élément d'interaction avec le fluide et le fluide magnéto-rhéologique et dans laquelle les moyens de génération d'un champ magnétique variable (20) sont disposés à l'intérieur de l'élément d'interaction avec le fluide (12), immobiles par rapport au boîtier.

12. Interface haptique selon la revendication 3 en combinaison avec la revendication 8, dans laquelle les moyens de génération d'un champ magnétique permanent (18") sont disposés entre deux parois latérales concentriques (12.1', 12.1'') de la cloche (12) et sont immobiles par rapport à un boîtier contenant le système de génération d'un champ magnétique, l'élément d'intexaction avec le fluide et le fluide magnéto-rhéologique.

13. Interface haptique selon l'une des revendications 1 à 12 en combinaison avec la revendication 6, dans laquelle le capteur de position angulaire (28, 128), de vitesse angulaire et/ou d'accélération angulaire est prévu à une extrémité longitudinale de l'arbre et comporte une partie solidaire en rotation de l'arbre et une partie immobile par rapport à l'arbre., par exemple la partie solidaire de l'arbre (2, 102, 202) étant une roue optique et la partie immobile étant une fourche optique.

14. Interface haptique selon l'une des revendications 1 à 13, dans laquelle l'arbre traverse (102) le système de génération de champ magnétique et ladite interface comportant une tige (103) traversant de part en part l'arbre (102), ladite tige étant est apte à se déplacer longitudinalement et un dispositif de détection (134) du déplacement de ladite tige (103).

15. Interface haptique selon l'une des revendications précédentes, comportant un dispositif thermique apte à modifier la température de l'élément d'interaction avec l'utilisateur et/ou un dispositif apte à faire vibrer l'élément d'interaction avec l'utilisateur, le dispositif thermique comportant par exemple au moins une cellule Peltier.

16. Ensemble haptique comportant un châssis et l'interface selon l'une des revendications précédentes montée sur ce châssis (42), ladite interface étant mobile selon l'axe (X) de l'arbre.

17. Ensemble haptique selon la revendication 16, dans lequel l'interface est mobile en translation selon au moins une direction orthogonale (Y, Z) à l'axe longitudinal (X) et/ou mobile en rotation autour d'au moins une direction orthogonale (Y, Z) à l'axe longitudinal (X).

18. Ensemble haptique selon la revendication 17, comportant des dispositifs à retour d'effort pour opposer une résistance lors d'un mouvement le long d'au moins un axe orthogonal à l'axe longitudinal ou autour de celui-ci.

## Patentansprüche

1. Haptische Schnittstelle, umfassend ein Element zur Interaktion mit einem Benutzer, eine Drehwelle (2, 102) mit longitudinaler Achse (X), mit der das Element zur Interaktion mit dem Benutzer (1) in Drehverbindung ist, ein Element zur Interaktion mit einem Fluid (12, 112), wobei das Element zur Interaktion mit dem Fluid (12, 112) in Drehverbindung mit der Welle (2, 102) ist, wobei das Fluid vom magnetorheologischen Typ ist, ein System zur Erzeugung (6) eines Magnetfelds in dem Fluid, sowie eine Steuereinheit, die dazu ausgelegt ist, Befehle für das System zur Erzeugung des Magnetfelds (6) zur Änderung des Magnetfelds zu erzeugen, wobei das Element zur Interaktion mit dem Fluid wenigstens eine Zylinderwand mit longitudinaler Achse (X) umfasst, **dadurch gekennzeichnet, dass** die Zylinderwand mit Durchgangsöffnungen (12.3, 112.3) und/oder mit Relief-Motiven und/oder mit Hohl-Motiven ausgestattet ist.

2. Haptische Schnittstelle nach Anspruch 1, bei der die Öffnungen und/oder die Relief-Motive und/oder die Hohl-Motive sich entlang der longitudinalen Achse (X) erstrecken.

3. Haptische Schnittstelle nach Anspruch 1 oder 2, bei der das Element zur Interaktion (12) mit dem Fluid mehrere konzentrische Seitenwände (12.1', 12.1") umfasst, die voneinander beabstandet und mit dem Boden (12.2) verbunden sind.

4. Haptische Schnittstelle nach einem der Ansprüche 1 bis 3, bei der die Zylinderwand des Interaktionselements (12) aus unmagnetischem Material hergestellt ist.

5. Haptische Schnittstelle nach einem der vorhergehenden Ansprüche, bei der das System zur Erzeugung (6) des Magnetfelds dazu ausgelegt ist, ein radiales Magnetfeld zu erzeugen.

6. Haptische Schnittstelle nach einem der Ansprüche 1 bis 5, umfassend wenigstens einen Sensor für die Winkelposition, die Winkelgeschwindigkeit und/oder die Winkelbeschleunigung (28, 128) der Welle (2, 102), wobei die Steuereinheit die Befehle als Funktion der Informationen erzeugt, die durch den wenigstens einen Positions-, Winkelgeschwindigkeits- und/oder Winkelbeschleunigungssensor (28, 128) geliefert werden.

7. Haptische Schnittstelle nach einem der Ansprüche 1 bis 6, bei der die Steuereinheit Befehle für das System zur Erzeugung des Magnetfelds in vorgegebenen Zeitintervallen erzeugt.

8. Haptische Schnittstelle nach einem der Ansprüche 1 bis 7, bei der das System zur Erzeugung des Magnetfelds Mittel zur Erzeugung eines variablen Magnetfelds (20, 120) sowie Mittel zur Erzeugung eines Permanentmagnetfelds (18, 18", 118) umfasst.

9. Haptische Schnittstelle nach Anspruch 8, bei der die Mittel zur Erzeugung eines Permanentmagnetfelds (18, 18", 118) wenigstens einen Permanentmagneten umfassen.

10. Haptische Schnittstelle nach Anspruch 8 oder 9, bei der die Mittel zur Erzeugung eines variablen Magnetfelds (20 120) wenigstens eine elektromagnetische Spule umfassen.

11. Haptische Schnittstelle nach einem der Ansprüche 8 bis 10, bei der die Mittel zur Erzeugung eines Permanentmagnetfelds im Inneren des Elements zur Interaktion mit dem Fluid (12) angeordnet sind, unbeweglich bezüglich eines Gehäuses, welches das System zur Erzeugung eines Magnetfelds, das Element zur Interaktion mit dem Fluid und das magnetorheologische Fluid enthält, und bei der die Mittel zur Erzeugung eines variablen Magnetfelds (20) im Inneren des Elements zur Interaktion mit dem Fluid (12) angeordnet sind, unbeweglich bezüglich des Gehäuses.

12. Haptische Schnittstelle nach Anspruch 3 in Verbindung mit Anspruch 8, bei der die Mittel zur Erzeugung eines Permanentmagnetfelds (18") zwischen zwei konzentrischen Seitenwänden (12.1', 12.1") der Glocke (12) angeordnet sind und unbeweglich sind bezüglich eines Gehäuses, welches das System zur Erzeugung eines Magnetfelds, das Element zur Interaktion mit dem Fluid sowie das magnetorheologische Fluid enthält.

13. Haptische Schnittstelle nach einem der Ansprüche 1 bis 12 in Verbindung mit Anspruch 6, bei der der Sensor für die Winkelposition (28, 128), für die Winkelgeschwindigkeit und/oder für die Winkelbeschleunigung an einem longitudinalen Ende der Welle vorgesehen ist und ein Teil umfasst, das in Drehverbindung mit der Welle ist, sowie ein Teil, das bezüglich der Welle unbeweglich ist, um beispeil bei der mit der Welle (2, 102, 202) verbundene Teil ein optisches Rad ist und der unbewegliche Teil eine optische Gabel ist.

14. Haptische Schnittstelle nach einem der Ansprüche 1 bis 13, bei der die Welle (102) das System zur Erzeugung des Magnetfelds durchsetzt und die Schnittstelle umfassend eine Stange (103), die die Welle (102) vollständig durchsetzt, wobei die Stange dazu ausgelegt ist, sich longitudinal zu verlagern, sowie eine Vorrichtung zur Erfassung (134) der Verlagerung der Stange (103).

15. Haptische Schnittstelle nach einem der vorhergehenden Ansprüche, umfassend eine thermische Vorrichtung, die dazu ausgelegt ist, die Temperatur des Elements zur Interaktion mit dem Benutzer zu verändern oder/und eine Vorrichtung, die dazu ausgelegt ist, das Element zur Interaktion mit dem Benutzer vibrieren zu lassen, um beispiel die thermische Vorrichtung wenigstens eine Peltier-Zelle umfassend.

16. Haptische Anordnung, umfassend ein Gestell und die Schnittstelle nach einem der vorhergehenden Ansprüche, die an diesem Gestell (42) montiert ist, wobei die Schnittstelle entlang der Achse (X) der Welle beweglich ist.

17. Haptische Anordnung nach Anspruch 16, bei der die Schnittstelle in Translation entlang wenigstens einer Richtung (Y, Z) orthogonal zur longitudinalen Achse (X) beweglich ist oder/und um wenigstens eine Richtung (Y, Z) orthogonal zur longitudinalen Achse (X) drehbeweglich ist.

18. Haptische Anordnung nach Anspruch 17, umfassend Kraftrückkopplungsvorrichtungen, um einem Widerstand während einer Bewegung entlang wenigstens einer Achse orthogonal zur longitudinalen Achse oder um diese herum entgegenzuwirken.

## Claims

1. Haptic interface comprising an element that interacts with a user, a rotation shaft (2, 102) with a longitudinal axis (X) to which the user interaction element (1) is fixed in rotation, an element that interacts with a fluid (12, 112), said fluid interaction element (12, 112) being fixed in rotation to said shaft (2, 102), said fluid being of magneto-rheological type, a system (6) for generating a magnetic field in said fluid, and a control unit capable of generating orders to said magnetic field generation system (6) so as to modify the magnetic field, said interaction element comprising at least one cylindrical wall with a longitudinal axis (X), **characterized in that** the cylindrical wall comprises through openings (12.3, 112.3) and/or patterns in relief and/or recessed patterns.

2. Haptic interface according to claim 1, in which the openings and/or relief patterns and/or recessed patterns extend along the longitudinal axis (X).

3. Haptic interface according to claim 1 or 2, in which the fluid interaction element (12) comprises several concentric sidewalls (12.1', 12.1") at a spacing from each other and fixed to the head (12.2).

4. Haptic interface according to one of claims 1 to 3, in which the cylindrical wall of the interaction element (12) is made of a non-magnetic material.

5. Haptic interface according to one of the previous claims, in which said magnetic field generation system (6) is capable of generating a radial magnetic field.

6. Haptic interface according to one of claims 1 to 5, comprising at least one angular position, angular velocity and/or angular acceleration sensor (28, 128) for said shaft (2, 102), said control unit generating orders as a function of information provided by said at least one position, velocity and/or angular acceleration sensor (28, 128).

7. Haptic interface according to one of claims 1 to 6, in which the control unit generates orders to the magnetic field generation system at given time intervals.

8. Haptic interface according to one of claims 1 to 7, in which the magnetic field generation system comprises means of generating a variable magnetic field (20, 120) and means of generating a permanent magnetic field (18, 18'', 118).

9. Haptic interface according to claim 8, in which the means of generating a permanent magnetic field (18, 18", 118) comprise at least one permanent magnet.

10. Haptic interface according to claim 8 or 9, in which the means of generating a variable magnetic field (20, 120) comprise at least one electromagnetic coil.

11. Haptic interface according to one of claims 8 to 10, in which the means of generating a permanent magnetic field are arranged inside the fluid interaction element (12), immobile relative to a housing comprising the system for generating a magnetic field, the fluid interaction element and the magneto-rheological fluid, in which the means of generating a variable magnetic field (20) are arranged inside the fluid interaction element (12), immobile relative to housing.

12. Haptic interface according to claim 3 in combination with claim 8, in which the means of generating a permanent magnetic field (18") are arranged between two concentric sidewalls (12.1', 12.1") of the bell (12) and are immobile relative to a housing comprising the system for generating a magnetic field, the fluid interaction element and the magneto-rheological fluid.

13. Haptic interface according to one of claims 1 to 12 in combination with claim 6, in which the angular position, angular velocity and/or angular acceleration sensor (28, 128) is provided at one longitudinal end of the shaft and comprises a part fixed to the shaft in rotation and with respect to the shaft, the part fixed to the shaft (2, 102, 202) being for example an optical wheel and the immobile part is an optical fork.

14. Haptic interface according to one of claims 1 to 13, in which shaft passes through (102) the magnetic field generation system and said interface comprising a rod (103) passing through the shaft (102) from one side to the other, said rod being capable of moving longitudinally and a device (134) for detecting displacement of said rod (103).

15. Haptic interface according to one of the previous claims, comprising a thermal device capable of modifying the temperature of the user interaction element or/and a device capable of vibrating the user interaction element, the thermal device comprising for example at least one Peltier cell.

16. Haptic assembly comprising a frame and the interface according to one of the previous claims, mounted on this frame (42), said interface being free to move along the axis (X) of the shaft.

17. Haptic assembly according to claim 22, in which the interface is free to move in translation along at least one direction orthogonal (Y, Z) to the longitudinal axis (X) or/and about at least one direction orthogonal (Y, Z) to the longitudinal axis (X).

18. Haptic assembly according to claim 17, comprising force feedback devices to oppose resistance during a movement along at least one axis orthogonal to or about the longitudinal axis.
